# EUROPÄISCHE PATENTSCHRIFT

(11) **EP 2 397 714 B1**
(45) Veröffentlichungstag und Bekanntmachung des Hinweises auf die Patenterteilung: **04.11.2015**
(21) Anmeldenummer: 11004280.1
(22) Anmeldetag: 24.05.2011
(51) Int. Cl.: F16D 1/06, F16D 1/02, F16D 1/10, F16D 3/18

(54) **Wellenkupplung**
shaft coupling
Accouplement d'arbres

(30) Priorität: 15.06.2010 DE 102010023780
(43) Veröffentlichungstag der Anmeldung: 21.12.2011
(73) Patentinhaber: Brevini Wind Deutschland GmbH, 61352 Bad Homburg (DE)
(72) Erfinder: Schönnenbeck, Gert, 61267 Neu-Anspach (DE); Grimbacher, Robert, 86199 Augsburg (DE); Ebing, Frank, 65510 Hünstetten (DE)
(74) Vertreter: Petersen, Frank

(56) Entgegenhaltungen:
- EP-A1- 0 990 809
- EP-A2- 1 630 436
- DE-A1- 2 648 069
- DE-A1- 3 822 637
- DE-A1- 19 535 963
- DE-A1-102007 018 464
- DE-U1- 29 822 647
- GB-A- 2 328 641
- JP-A- 2006 017 295

## Beschreibung

Die Erfindung betrifft eine Kupplung für zwei drehmomentmäßig miteinander zu verbindende Wellen mit einer zwischen den Enden der Wellen angeordneten Kupplungshülse, gemäß dem Oberbegriff des beigefügten Hauptanspruches.

Zum Ausgleich von radialem und/oder winkligem Versatz von Wellen, die drehmomentmäßig verbunden werden sollen, werden oft Doppelgelenkkupplungen verwendet. Es ist dabei bekannt, die sich gegenüberliegenden Wellenenden mit Aussenverzahnungen zu versehen und die die beiden Wellenenden verbindende Kupplungshülse dann mit korrespondierenden Innenverzahnungen. Die Kupplungshülse wird dann auf den beiden sich gegenüberliegenden Wellenenden jeweils spielbehaftet axial fixiert, wobei zum Ausgleich der genannten Fluchtungsabweichungen üblicherweise die auf den Wellenenden vorhandenen Außenverzahnungen zweidimensional ballig ausgeführt werden.

Es ist bei anderen Anwendungsfällen auch bekannt, wenigstens eine der Wellen als Hohlwelle auszuführen und dann die Kupplungshülse in diese Hohlwelle hineinlaufen zu lassen. Dabei ist dann das Hohlwellenende mit einer Innenverzahnung versehen und die Kupplungshülse trägt an dieser Stelle eine korrespondierende Außenverzahnung. Auch bei diesen Anwendungsfällen sind die genannten Außenverzahnungen zum Ausgleich der Fluchtungsabweichungen ballig ausgeführt.

In den beschriebenen Kupplungen können erhebliche Axialkräfte entstehen, die u. a. abhängen vom Antriebsdrehmoment, vom Teilkreisdurchmesser der vorgesehenen Verzahnungen und/oder vom Reibbeiwert innerhalb der Verzahnung.

Die diesbezüglich zur Anwendung kommenden Berechnungsverfahren zeigen in der Praxis gewisse Einschränkungen. So ist es nicht nachgewiesen, ob die Kräfte tatsächlich nur in ihrer errechneten maximalen Höhe auftreten. Auch musste festgestellt werden, dass die in den einzelnen Verzahnungen sich ergebenden Kräfte sich selbst bei einer symmetrischen Kupplungsgestaltung nicht-gegenseitig aufheben. Vielmehr sind Fälle bekannt, in denen sich die Kräfte zu einander addieren.

Dies bedeutet aber, dass die Wellenlagerungen nicht nur durch die bekanten und gut berechenbaren Betriebslasten beansprucht werden, sondern dass durch die ggf. vorgesehene Kupplung noch erheblich höhere Lasten auftreten können. Demgemäss müssen die Wellenlagerungen konstruktiv grösser ausgeführt werden, was eine entsprechende Verteuerung der entsprechenden Getriebe mit sich bringt.

Außerdem muss für die Kupplungshülse ein zusätzlicher Bauraum vorgesehen werden. Ein entsprechend ausgerüstetes Getriebe baut unter diesem Aspekt somit entsprechend länger. Demgemäß ist für dieses Getriebe also auch ein entsprechend größeres Gehäuse vorzusehen, das natürlich auch entsprechend schwerer ist.

Hierdurch können sich bei besonderen Anwendungsfällen erhebliche Folgen ergeben: So ist ein spezielles Anwendungsbeispiel für eine erfindungsgemäße Kupplung der Anschluss eines Planetengetriebes in einer Windkraftanlage. Ein solches Getriebe hat Dimensionen, bei denen ein Gehäuse einen Durchmesser von ca. 3 m und mehr haben kann. Aufgrund der für die Kupplung vorzusehenden Gehäuseverlängerung resultiert hieraus ein zusätzliches Gewicht, das mehrere Tonnen betragen kann. Dies erschwert einerseits die Montage des Getriebes bei der Errichtung der Windkraftanlage und erhöht andererseits auch die dauernde statische Belastung des Mastes, an dem der Rotor sowie das mit diesem zusammengekoppelte Getriebe und der nachgeschaltete Generator aufgehängt werden. Aufgrund dieses erhöhten, zusätzlichen Gewichtes müssen dabei auch die das Getriebe und den Generator aufnehmende Gondel sowie die Aufhängung für diese stabiler und damit schwerer ausgeführt werden, was die Belastung z. B. für den Mast weiter verschärft.

Um dies zu vermeiden wird ein Konstrukteur versuchen, die Kupplung besonders kompakt und raumsparend zu gestalten.

Im Stand der Technik wird hierzu vorgeschlagen, dass die Enden der zwei drehmomentmäßig miteinander zu verbindenden Wellen sich unter Bildung eines Ringspaltes übergreifen und die Kupplungshülse in dem Ringspalt angeordnet ist.

Eine solche aus der JP 2006 017295 A bekannte Bauform hat den Vorteil, dass für die Kupplungshülse in Axialrichtung kein separater Bauraum vorgesehen werden muss, so dass ein Getriebe mit einer entsprechenden Kupplung sehr kurz ausführbar ist. Damit ist auch ein entsprechendes Getriebegehäuse kürzer und damit insbesondere gewichtssparend ausführbar.

Bei einer erfindungsgemäßen Ausführungsform hat die Kupplungshülse lediglich an ihrem einen Ende eine Innen- und lediglich an ihrem anderen Ende eine Außenverzahnung, die mit korrespondierenden Verzahnungen an den Wellenenden zusammenwirken, wobei jeweils die Außenverzahnungen ballig ausgeführt sind, so dass über die Kupplungsstücke ein winkliger und/oder radialer Versatz der Wellenenden auszugleichen ist.

Derartige Verzahnungen sind bekanntermaßen sehr betriebssicher und die Herstellung derartiger Verzahnungen stellt für einen getriebeherstellenden Betrieb keine Probleme dar.

Es wird vorgeschlagen, dass wenigstens eine der Verzahnungen an einem mit dem entsprechenden Wellenende verbundenen Verzahnungskranz vorgesehen ist.

Hiermit ist insbesondere das Problem zu lösen, dass die o. g. Innen- bzw. Außenverzahnungen der Kupplungshülse und/oder oder die korrespondierenden Verzahnungen an den Wellenenden einem besonderen Verschleiß unterliegen: Wird beispielsweise eine der Wellen, deren Wellenenden drehmomentmäßig mit der anderen Welle verbunden werden soll, aus hier nicht näher diskutierten Gründen als Gussteil hergestellt, z. B. aus Grauguss, so hat diese einen erheblich geringeren Verschleißwiderstand als insbesondere die Kupplungshülse, die üblicherweise aus Stahl hergestellt wird. Um dies auszugleichen, müsste eigent-lich die Verzahnung entsprechend vergrößert werden, was aber eine uner-wünschte Vergrößerung des benötigten Bauraums zur Folge hätte und damit die wiederum oben bereits beschriebenen negativen Rückwirkungen auf die Größe, das Gewicht und die Kosten des Gehäuses.

Der jetzt vorgesehene Verzahnungskranz kann dabei ebenfalls aus Stahl bestehen wie die Kupplungshülse. Damit ist die besonders verschleißgefährdete Gelenkverzahnung eine Kombination Stahl/Stahl, die sehr verschleißfest ist.

Der aus Stahl bestehende separate Verzahnungskranz kann dann beispielsweise fest in das ihn aufnehmende hohlwellenartige Wellenende eingepresst werden.

Da Presssitze aber wieder speziellen Begrenzungen unterliegen, wird insbesondere vorgeschlagen, den Verzahnungskranz mittels eines Verzahnungssitzes mit dem ihn aufnehmenden Wellenende drehfest zu verbinden.

Insbesondere wird auf diese Weise verhindert, dass an dem eigentlichen Wellenmaterial, dass wie oben beschrieben das relativ empfindliche Gussmaterial sein kann, ein Verschleiß aufgrund von Relativbewegungen auftreten kann.

Um den Verschleiß der Kupplungshülse weiter zu verringern, wird des Weiteren vorgeschlagen, diese an ihren axialen Enden torusförmig auszubilden. Hierdurch wird erreicht, dass die axialen Anlagen der Kupplungshülse eine Winkelbewegung der zu verbindenden Wellen ermöglichen durch ein Wälz-Gleiten unter Axiallast, das sehr verlustarm erfolgen kann. Die miteinander zu verbindenden Wellen können somit leicht gegeneinander bewegt werden.

Insbesondere ist die Kupplungshülse an ihren axialen Enden über mit den Wellenenden jeweils verbundene Anlageflansche in Axialrichtung fixiert.

Dies hat insbesondere den Vorteil, dass die innerhalb der Kupplung durch die Gelenkreibung entstehenden axialen Kräfte sich auf unterschiedlichste Weise, je nach Richtung der Axialkraft, kurzschließen können. Damit wird eine Entlastung der Wellenlager erreicht und diese können damit kleiner ausgelegt werden, was unter den oben diskutierten Aspekten positive Auswirkungen bezüglich einer kleineren Dimensionierung auch des Getriebegehäuses etc. mit sich bringt.

Bei der Auslegung der Verzahnungen innerhalb der Kupplung ist es bekannt, dass sich diese insbesondere bei einem relativ elastischen Material wie beispielsweise Grauguss entsprechend dem Drehmomentaufbau verdrillt und somit die Endkanten der die Verzahnung bildenden Zähne insbesondere im Gussmaterial leicht überlastet werden können.

Um dies zu kompensieren wird klassischerweise eine oder beide der miteinander korrespondierenden Verzahnungen bei der Bearbeitung korrigiert. Dies ist allerdings nur für ein betragsmäßig bestimmtes Drehmoment exakt ausführbar.

Für eine besonders bevorzugte Ausführungsform wird daher vorgeschlagen, eine U-förmig ausgeprägte bewusste Materialschwächung unter der Verzahnung des Verzahnungskranzes vorzusehen.

Hierdurch wird erreicht, dass der Endbereich der Verzahnung des Verzahnungskranzes drehmomentabhängig nachgibt und somit die Zahnenden bei den unterschiedlichsten Belastungen bedarfsgerecht entlastet werden.

Weitere Vorteile und Merkmale der Erfindung ergeben sich aus der nachfolgenden Beschreibung eines Ausführungsbeispiels.

Dabei zeigt:
- Figur 1: Schnitt durch eine Doppelgelenkkupplung;
- Figur 2: Schnitt durch einen Verzahnungskranz.

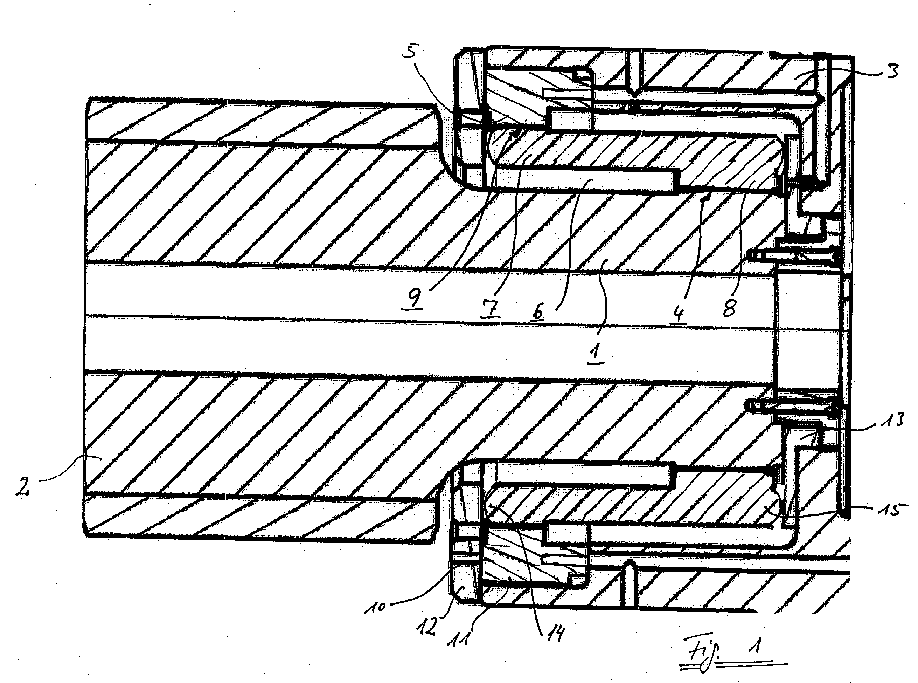

In der Figur 1 erkennt man das Ende 1 einer Welle 2. Dieses ist mit dem Ende 3 einer (nicht näher dargestellten) zweiten Welle drehmomentmäßig zu verbinden. Hierzu ist das Ende 1 der Welle 2 mit einer endständigen Außenverzahnung 4 versehen. Außerdem ist das Ende 3 der zweiten (nicht näher dargestellten) Welle hohlwellenartig ausgeführt und ist endständig mit einer Innenverzahnung 5 versehen.

Das hohlwellenartige Ende 3 übergreift das Ende 1 der Welle 2, so dass sich dazwischen ein Ringspalt 6 ergibt.

In diesem Ringspalt 6 ist eine Kupplungshülse angeordnet, die an ihrem einen axialen Ende eine Innenverzahnung 8 aufweist, sowie an ihrem in Axialrichtung gegenüberliegenden anderen Ende eine Außenverzahnung 9.

Die Innenverzahnung 8 der Kupplungshülse 7 korrespondiert mit der Außenverzahnung 4 der Welle 1 und die Außenverzahnung 9 der Kupplungshülse 7 korrespondiert mit der Innenverzahnung 5 des hohlwellenartigen Endes 3 der zweiten (nicht näher dargestellten) Welle.

Jeweils die Außenverzahnungen der entsprechenden Paarungen sind ballig ausgeführt, so dass über die Kupplungshülse 7 ein winkliger und/oder radialer Versatz ausgeglichen werden kann.

Dabei kommt es zu Relativbewegungen innerhalb der Verzahnung. Bei einem wie hier dargestellten Beispiel, bei dem das hohlwellenartigen Wellenende 3 aus einem verschleißanfälligen Material wie beispielsweise Grauguss bestehen kann, befindet sich deshalb die Innenverzahnung 5, die mit der Außenverzahnung 9 der Kupplungshülse 7 kämmt, nicht unmittelbar am Wellenende 3 sondern an einem mit dem Wellenende 3 verbundenen Verzahnungskranz 10. Dieser Verzahnungskranz 10 ist aus Stahl, so dass zwischen ihm und der Kupplungshülse 7 eine Materialkombination Stahl/Stahl vorliegt, die relativ verschleißfest ist.

Um die von der Kupplungshülse 7 kommenden Drehmomente vom Verzahnungskranz 10 in das hohlwellenartige Wellenende 3 einzuleiten, ist der Verzahnungskranz 10 außen mit einer Verzahnung 11 versehen, so dass er über einem Verzahnungssitz drehfest mit dem Wellenende 3 verbunden ist.

Um die Kupplungshülse 7 in ihrer axialen Position zu fixieren, ist sie über scheibenartige Anlageflansche 12, 13 gehalten. Diese Anlageflansche 12, 13 sind entsprechend an den Wellenenden 1 bzw. 3 befestigt und ermöglichen, die innerhalb der Verzahnungen auftretenden Kräfte zwischen der Wellenenden und der Kupplungshülse entstehend zu führen und ggf. auch kurzzuschließen.

Um die bei der Verdrehung der Wellenenden auftretende winkelige Bewegung zwischen den Anlageflanschen 12, 13 und der Kupplungshülse 7 zu ermöglichen, ist die Kupplungshülse 7 an ihren axialen Enden 14, 15 torusförmig ausgebildet.

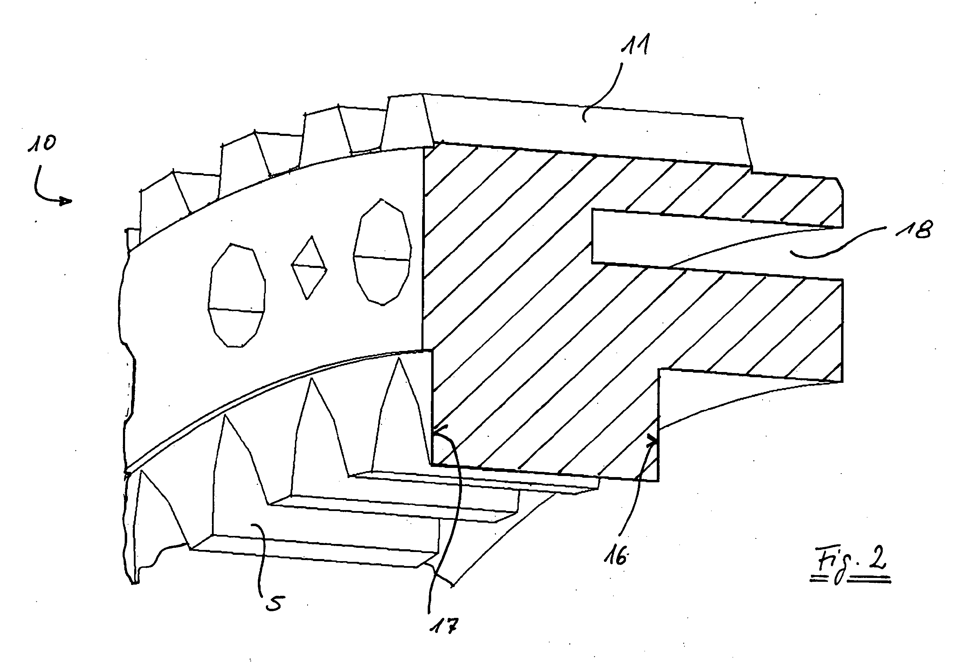

In der Figur 2 erkennt man den Verzahnungskranz 10 in einer perspektivischen, geschnittenen Ansicht.

Dieser Verzahnungskranz 10 wird wie gesagt über seinen Verzahnungssitz 11 verdrehfest in das Wellenende 3 eingesetzt.

Es ist jetzt bekannt, dass bei Einleitung von Drehmomenten in die Innenverzahnung 5 diese sich entsprechend dem Drehmomentaufbau verdrillt und somit Endkanten 16, 17 zu einer Überlastung neigen.

Klassischerweise wird eine entsprechende Verzahnung 5 deswegen bei ihrer Herstellung korrigiert. Bei einem speziellen vorgegebenen Drehmoment kann damit eine entsprechende Verformung und damit Überlastung vermieden werden.

Bei der hier dargestellten Ausführungsform ist an dem Verzahnungskranz 10 aber die Verzahnung 5 einseitig in Axialrichtung durch einen U-förmigen Einschnitt 18 untergriffen. Dieser Einschnitt 18 bildet eine beabsichtigte Materialschwächung unterhalb der Verzahnung, so dass bei einer drehmomentmäßigen Belastung der Endbereich 16 der Verzahnung 5 definiert nachgibt und somit die Zahnenden der Verzahnung 5 bei jeder beliebigen Belastung korrespondierend entlastet werden. - Damit ist eine entsprechende Verzahnung verschleißfester.

## Patentansprüche

1. Kupplung für zwei drehmomentmäßig miteinander zu verbindenden Wellen mit einer zwischen den Enden (1, 3) der Wellen angeordneten Kupplungshülse (7), wobei die Enden (1, 3) der Wellen sich unter Bildung eines Ringspaltes (6) übergreifen
und die Kupplungshülse (7) in dem Ringspalt (6) angeordnet ist und wobei die Kupplungshülse (7) eine Innenverzahnung (8) und eine Außenverzahnung (9) aufweist,
die mit korrespondierenden Außen- bzw. Innenverzahnungen (4, 5) an den Wellenenden (1, 3) zusammenwirken,
**dadurch gekennzeichnet,**
**dass** die Kupplungshülse (7) die Innenverzahnung (8) lediglich an einem axialen Ende und die Außenverzahnung (9) lediglich an ihrem axial anderen Ende aufweist und dass die jeweiligen Außenverzahnungen (4, 9) ballig ausgeführt sind,
so dass über die Kupplungshülse (7) ein winkliger und/oder radialer Versatz der Wellenenden (1, 3) ausgleichbar ist.

2. Kupplung gemäß Anspruch 1,
**dadurch gekennzeichnet,**
**dass** wenigstens eine der korrespondierenden Verzahnungen (4, 5) an einem mit dem entsprechenden Wellende (3) verbundenen Verzahnungskranz (10) vorgesehen ist.

3. Kupplung gemäß Anspruch 2,
**dadurch gekennzeichnet,**
**dass** der Verzahnungskranz (10) mittels eines Verzahnungssitzes (11) mit dem entsprechenden Wellenende (3) drehfest verbunden ist.

4. Kupplung gemäß einem oder mehreren der vorhergehenden Ansprüche,
**dadurch gekennzeichnet,**
**dass** die Kupplungshülse (7) an ihren axialen Enden (14, 15) torusförmig ausgebildet ist.

5. Kupplung gemäß einem oder mehreren der vorhergehenden Ansprüche,
**dadurch gekennzeichnet,**
**dass** die Kupplungshülse (7) an ihren axialen Enden (14, 15) über mit den Wellenenden (1, 3) verbundenen Anlageflanschen (12, 13) fixiert ist.

6. Kupplung gemäß einem oder mehreren der vorhergehenden Ansprüche,
**dadurch gekennzeichnet;**
**dass** der Verzahnungskranz (10) mit einem die Verzahnung (5) einseitig in Axialrichtung untergreifenden Einschnitt (18) versehen ist.

## Claims

1. A coupling for two shafts which are to be rotationally connected together with a coupling sleeve (7) arranged between the ends (1, 3) of the shafts, wherein the ends (1, 3) of the shafts engage over one another whilst defining an annular gap (6) and the coupling sleeve (7) is arranged in the annular gap (6) and wherein the coupling sleeve (7) has an internal series of teeth (8) and an external series of teeth (9), which cooperate with corresponding external and internal series of teeth (4, 5), respectively, on the shaft ends (1, 3), **characterised in that** the coupling sleeve (7) has the inner series of teeth (8) merely at one axial end and the external series of teeth (9) merely at its other axial end and that the respective external series of teeth (4, 9) are of round construction so that an angular and/or radial offset of the shaft ends (1, 3) may be compensated for by means of the coupling sleeve (7).

2. A coupling as claimed in Claim 1, **characterised in that** at least one of the corresponding series of teeth (4, 5) is provided on a toothed ring (10) connected to the corresponding shaft end (3).

3. A coupling as claimed in Claim 2, **characterised in that** the toothed ring (10) is rotationally fixedly connected to the corresponding shaft end (3) by means of a tooth seat (11).

4. A coupling as claimed in one or more of the preceding claims, **characterised in that** the coupling sleeve (7) is of toroidal shape at its axial ends (14, 15).

5. A coupling as claimed in one or more of the preceding claims, **characterised in that** the coupling sleeve (7) is fixed at its axial ends (14, 15) by means of engagement flanges (12, 13) connected to the shaft ends (1, 3).

6. A coupling as claimed in one or more of the preceding claims, **characterised in that** the toothed ring (10) is provided with a slot (18) extending on one side in the axial direction below the series of teeth (5).

## Revendications

1. Accouplement pour deux arbres à relier entre eux en matière de couple, avec une douille d'accouplement (7) disposée entre les extrémités (1, 3) des arbres, sachant que les extrémités (1,3) des arbres se recouvrent en formant un espace annulaire (6) et que la douille d'accouplement (7) est disposée dans l'espace annulaire (6),
et sachant que la douille d'accouplement (7) présente une denture intérieure (8) et une denture extérieure (9), qui coopèrent avec des dentures respectivement extérieure et intérieure correspondantes (4, 5) sur les extrémités (1, 3) des arbres,
**caractérisé en ce que** la douille d'accouplement (7) présente la denture intérieure (8) uniquement à une extrémité axiale et la denture extérieure (9) uniquement à son autre extrémité axiale,
et **en ce que** les dentures extérieures respectives (4, 9) sont réalisées convexes, de sorte qu'un décalage angulaire et/ou radial des extrémités (1, 3) des arbres peut être compensé au moyen de la douille d'accouplement (7).

2. Accouplement selon la revendication 1, **caractérisé en ce qu'**au moins une des dentures correspondantes (4, 5) est prévue sur une couronne dentée (10) assemblée à l'extrémité d'arbre correspondante (3).

3. Accouplement selon la revendication 2, **caractérisé en ce que** la couronne dentée (10) est assemblée en solidarité de rotation à l'extrémité d'arbre correspondante (3) au moyen d'un ajustement denté (11).

4. Accouplement selon une ou plusieurs des revendications précédentes, **caractérisé en ce que** la douille d'accouplement (7) est réalisée torique à ses extrémités axiales (14, 15).

5. Accouplement selon une ou plusieurs des revendications précédentes, **caractérisé en ce que** la douille d'accouplement (7) est immobilisée à ses extrémités axiales (14, 15) au moyen de brides d'appui (12, 13) assemblées aux extrémités (1, 3) des arbres.

6. Accouplement selon une ou plusieurs des revendications précédentes, **caractérisé en ce que** la couronne dentée (10) est pourvue d'une entaille (18) s'engageant sous la denture (5) d'un côté en direction axiale.
